# DEMANDE DE BREVET EUROPEEN

(11) **EP 1 189 095 A1**
(43) Date de publication de la demande: **20.03.2002**
(21) Numéro de dépôt: 00203169.8
(22) Date de dépôt: 14.09.2000
(51) Int. Cl.: G02F 1/1335, G02F 1/1347, G04G 9/00

(54) **Ensemble d'affichage bicolore à cristaux liquides**

(71) Demandeur: ASULAB S.A., CH-2501 Bienne (CH)
(72) Inventeur: Naci, Basturk, 2073 Enges (CH)
(74) Mandataire: Thérond, Gérard Raymond

(57) **Abrégé**

L'ensemble comprend d'une part un premier dispositif I déterminant une première couleur ledit dispositif se composant d'un module d'affichage à cristaux liquides (CL; CL₁, CL₂) comprenant à l'avant et à l'arrière un polariseur linéaire sélectif (PAb₁, PAb₂) de ladite première couleur, d'autre part un deuxième dispositif Il comprenant un filtre coloré (Fy) correspondant à la deuxième couleur. L'ensemble est caractérisé en ce que les polariseurs sélectifs (PAb₁, PAb₂) ont leurs axes de polarisation parallèles entre eux, en ce que le filtre coloré (Fy) comprend à l'avant un polariseur réflectif (PR₁) ayant son axe de polarisation parallèle aux axes de polarisation des deux polariseurs sélectifs (PAb₁, PAb₂) et à l'arrière un élément réfléchissant (R, PR₂), et en ce qu'une unité de commande (7) permet de définir une configuration de commutation affichant une information dans la première couleur sur un fond correspondant à la deuxième couleur ou inversement.

## Description

La présente invention concerne un ensemble d'affichage bicolore à cristaux liquides permettant d'obtenir un contraste et une pureté de couleur élevés par un agencement particulier des différents éléments composant ledit ensemble d'affichage.

L'invention permet de rendre plus lisibles et plus attrayantes les informations délivrées par tout type d'appareil électronique et notamment les informations horaires ou non horaires délivrées par une pièce d'horlogerie.

En se référant par exemple au chapitre de T. J. Scheffer intitulé "Liquid crystal color display" dans l'ouvrage sur "Non emissive Electrooptic Displays" (1976, éditeurs A. R. Kmetz et F. K. von Willisen), on connaît déjà des agencements permettant d'afficher des informations dans une première couleur sur un fond ayant une deuxième couleur. Pour avoir une bonne lisibilité, il est souhaitable d'avoir un contraste élevé, ce qui peut idéalement être obtenu lorsque les première et deuxième couleurs sont des couleurs complémentaires tels que vert et rouge ou jaune et bleu.

Dans les constructions connues de l'art antérieur, l'ensemble d'affichage comprend fondamentalement, en partant du côté de l'observateur, un module d'affichage des informations, de part et d'autre duquel sont disposés deux polariseurs linéaires dont l'un au moins est sélectif de la première couleur, un filtre coloré correspondant à la deuxième couleur et un réflecteur métallique à l'arrière. Comme cela sera expliqué plus en détail par la suite, un tel agencement ne permet pas de découpler parfaitement les première et deuxième couleurs, de sorte qu'on aura par exemple un affichage jaune sur fond vert en utilisant un polariseur sélectif bleu et un filtre jaune.

La présente invention permet au contraire, toujours dans l'hypothèse d'un ou de plusieurs polariseurs sélectifs bleus et d'un filtre jaune d'avoir un affichage en jaune sur un fond brillant bleu.

A cet effet, l'invention a pour objet un ensemble d'affichage bicolore comprenant un premier dispositif déterminant une première couleur et un deuxième dispositif déterminant une deuxième couleur. Le premier dispositif se compose d'un module d'affichage à cristaux liquides, dont les configurations de commutation sont déterminées par une unité de commande électronique alimentée par une source d'énergie, ledit module d'affichage comprenant deux polariseurs linéaires disposés à l'avant et à l'arrière dudit module et dont l'un au moins est sélectif d'une première couleur. Le deuxième dispositif comprend un filtre coloré déterminant la deuxième couleur. L'ensemble d'affichage est caractérisé en ce que les polariseurs du premier dispositif ont leurs axes de polarisation parallèles entre eux, en ce que le filtre coloré du deuxième dispositif comprend à l'avant un polariseur réflectif ayant son axe de polarisation parallèle aux axes de polarisation des deux polariseurs du premier dispositif, et à l'arrière un élément réfléchissant et en ce que l'unité de commande permet de définir une configuration de commutation affichant une information dans la première couleur sur un fond correspondant à la deuxième couleur ou inversement.

Comme cela sera montré dans la description détaillée, cet agencement précis de tous les éléments constitutifs de cet ensemble d'affichage selon l'invention, permet de découpler avec une très grande efficacité les première et deuxième couleurs, c'est-à-dire d'avoir des couleurs avec une pureté élevée, ce qui contribue à accroître le contraste et permet donc en particulier d'offrir une meilleure lisibilité de l'information affichée.

L'élément réfléchissant du deuxième affichage peut être un réflecteur métallique qui réfléchira la totalité de la lumière incidente, un réflecteur transflectif qui ne la réfléchira que partiellement ou un polariseur réflectif croisé avec le polariseur réflectif avant qui laissera passer une partie de la lumière incidente. Dans ce dernier cas, la lumière allant au-delà de l'élément réfléchissant permettra de rendre visible un deuxième affichage placé à l'arrière du deuxième dispositif. Inversement, dans ces deux derniers cas, il sera possible de placer à l'arrière du deuxième dispositif une source lumineuse (diode, feuille électroluminescente, etc.) qui augmentera la luminosité de l'affichage, par exemple en vision nocturne.

Comme on le verra par la suite, les deux polariseurs du premier dispositif peuvent être tous les deux des polariseurs sélectifs de la première couleur.

Le module d'affichage à cristaux liquides peut être constitué par une unique cellule d'affichage matriciel ou à segments à cristaux liquides. Ce module d'affichage peut également avoir une construction plus complexe, par exemple être formé par une valve optique et par une cellule matricielle ou à segment pour permettre une inversion de contraste, comme cela sera montré dans les exemples qui suivent.

D'autres caractéristiques, avantages et variantes de la présente invention apparaîtront à la lecture de la description d'une pièce d'horlogerie prise à titre d'exemple illustratif et non limitatif d'application d'un affichage selon l'invention, en référence aux dessins annexés dans lesquels :
- la figure 1 est une vue en coupe d'une montre-bracelet comportant un ensemble d'affichage selon l'invention;
- la figure 2 est une représentation schématique d'un mode de fonctionnement selon l'art antérieur;
- la figure 3 est une représentation schématique du fonctionnement d'un premier mode de réalisation de l'ensemble d'affichage selon l'invention, pour un premier état de commutation;
- la figure 4 correspond à la figure 3 pour un deuxième état de commutation, et
- la figure 5 est une représentation schématique de la construction et du fonctionnement d'un deuxième mode de réalisation de l'ensemble d'affichage selon l'invention.

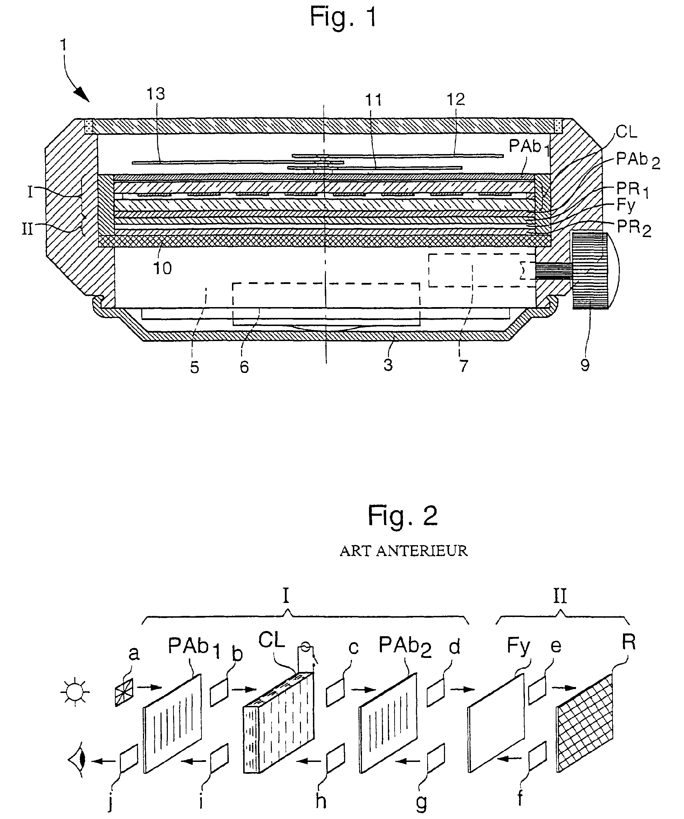

La montre représentée à la figure 1, désignée par la référence générale 1, comprend classiquement une carrure 2, un fond 3 et une glace 4, délimitant ensemble une boîte dans la partie inférieure de laquelle est disposé un mouvement d'horlogerie électronique 5 alimenté par une source d'énergie 6, telle qu'une pile-bouton. Le mouvement 5 comprend un circuit électronique garde-temps associé à un dispositif d'entraînement (non représenté) des aiguilles 11, 12, 13 heures, minutes, secondes se déplaçant au-dessus d'un cadran 10 portant des index horaires (non représentés).

Entre le cadran 10 et la glace 4 est disposé un ensemble d'affichage bicolore comportant un premier dispositif I déterminant une première couleur, et un deuxième dispositif II déterminant une deuxième couleur. Chaque dispositif est formé par la superposition des différents éléments dont les épaisseurs ont fortement été exagérées sur la figure 1 pour une meilleure compréhension.

Pour une meilleure compréhension de l'invention, on va d'abord décrire un affichage bicolore selon l'art antérieur dont les éléments constitutifs sont schématiquement représentés à la figure 2.

Le premier dispositif I comprend, en partant de l'extérieur, un polariseur linéaire absorbant PAb₁ sélectif d'une première couleur B, par exemple bleu, un module d'affichage CL à cristaux liquides et un deuxième polariseur linéaire absorbant PAb₂ sélectif de la même première couleur B et dont l'axe de polarisation est parallèle à l'axe de polarisation du premier polariseur PAb₁. Dans l'exemple représenté, le module d'affichage est formé simplement par une cellule à cristaux liquides matricielle ou à segments dont l'état de commutation est déterminé par une unité de commande électronique 7, reliée à une source d'énergie 6 et recevant des consignes en fonction des manipulations effectuées sur au moins un organe de commande 9. Dans la suite de la description, les cristaux liquides remplissant la cellule CL sont de type nématique à hélice (TN) à anisotropie positive, mais il est bien évident que l'homme de métier peut, sans sortir du cadre de l'invention, utiliser des cristaux liquides TN à anisotropie négative, voir utiliser d'autres types de cristaux liquides, tels que des cristaux liquides à deux fréquences. Le deuxième dispositif Il comprend un filtre Fy déterminant une deuxième couleur Y, par exemple jaune, à l'arrière duquel est disposé un réflecteur métallique R par exemple formé par une feuille de métal ou par un substrat métallisé.

Pour comprend le fonctionnement d'un ensemble d'affichage bicolore selon cet art antérieur, il convient d'abord de rappeler les propriétés des différents éléments constitutifs, ou plus exactement le caractère imparfait des éléments sélectifs d'une couleur déterminée. Pour simplifier, on ne retient par la suite, dans la lumière incidente blanche non polarisée représentée par le carré a, que la composante bleue B et la composante jaune J, en supposant de plus qu'une lumière non polarisée est formée par 50% de polarisation selon un premier axe et par 50% de polarisation selon un axe perpendiculaire au premier. En tenant compte de ces hypothèses, un polariseur linéaire absorbant sélectif bleu PAb recevant une lumière monochromatique bleue non polarisée transmettra 50% de lumière polarisée selon son axe de polarisation et 50x% polarisée selon un axe perpendiculaire; si la lumière incidente bleue est polarisée selon son axe, il en transmettra 100% selon le même axe; si la lumière est polarisée selon un axe perpendiculaire, il en transmettra x% (sans modifier l'axe de polarisation). Si maintenant la lumière incidente est une lumière monochromatique jaune non polarisée, le polariseur linéaire absorbant sélectif bleu en transmettra y% selon son axe de polarisation 50t% selon un axe perpendiculaire; si la lumière incidente jaune est polarisée selon son axe il en transmet z% et si elle est polarisée perpendiculairement à son axe, il en transmet t% (sans modifier l'axe de polarisation). Pour les coefficients précédents, il est possible de retenir les valeurs suivantes : x = 5%, y = 40%, z = 80% et t = 1%, ces valeurs pouvant varier en fonction du caractère plus ou moins imparfait d'un polariseur linéaire absorbant sélectif de couleur. On observera enfin qu'un filtre coloré est également imparfait : un filtre jaune Fy transmet 100% de lumière jaune, mais aussi w% de lumière bleue, polarisée ou non polarisée, la valeur du coefficient w pouvant être évaluée à 15%.

Dans la figure 2, on a représenté, après chaque passage d'un élément de la construction, un carré numéroté de b à j représentant en intensité et en polarisation l'état d'un rayonnement monochromatique bleu "B" ou jaune "Y". Les valeurs d'atténuation et la polarisation sont données dans le tableau 1 ci-après pour chaque couleur en fonction d'une configuration de commutation OFF de la cellule CL, dans laquelle le cristal liquide choisi fait subir une rotation de 90° à la lumière polarisée et en fonction d'une configuration de commutation ON qui ne modifie pas son axe de polarisation. Les trois dernières lignes indiquent respectivement :
- le coefficient d'atténuation de chaque couleur dans les états de commutation ON/OFF;
- le rapport B/Y ou Y/B déterminant la couleur dominante, ou inversement leur mélange, et
- la valeur du rapport précédent pour les coefficients indiqués précédemment.

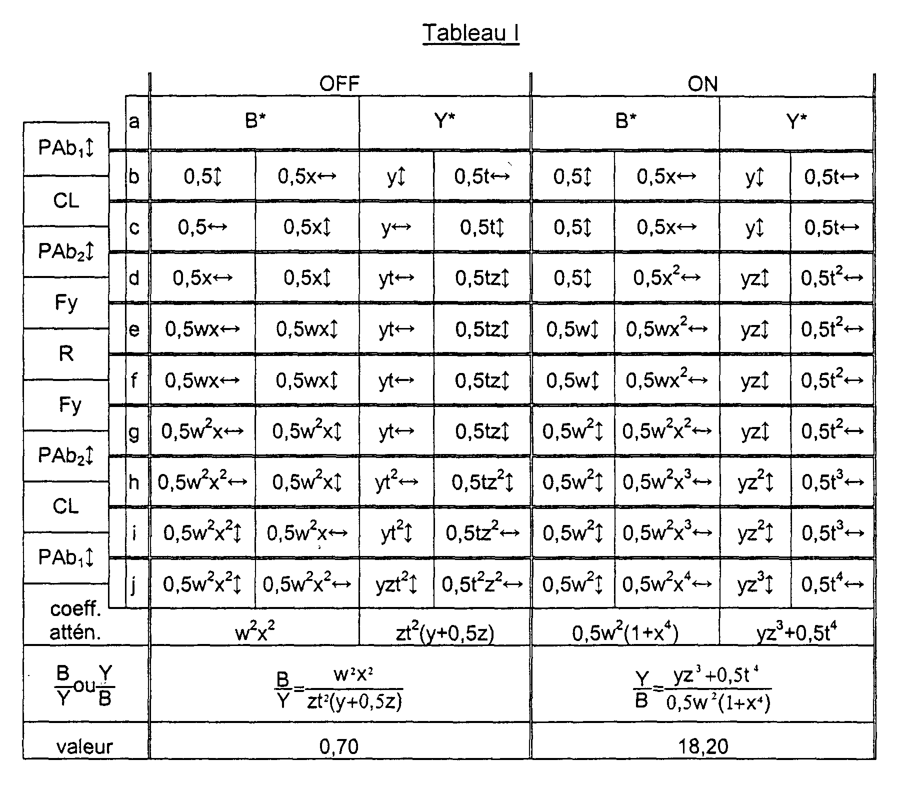

A titre explicatif, on indique ci-après comment on établit l'atténuation de la couleur bleue "B" dans l'état OFF. En "b", après le passage du polariseur PAb₁, on a une composante parallèle à l'axe du polariseur avec une atténuation de 0,5 et une composante perpendiculaire avec une atténuation de 0,5x. Si on considère la composante parallèle, elle subit en "c", après le passage de la cellule CL, une rotation de 90° sans atténuation; en "d" une atténuation x portant la valeur à 0,5x étant donné qu'elle a traversé le polariseur PAb₂ avec une polarisation perpendiculaire à l'axe de celui-ci; en "e" après le passage du filtre jaune Fy, elle subit une nouvelle atténuation w portant la valeur à 0,5wx; en "f" elle est réfléchie par le réflecteur R sans modification; sur le trajet retour elle subit de nouvelles atténuations w en "g" et x en "h", de sorte qu'elle arrive en "j" au niveau de l'observateur avec une atténuation globale de 0,5w²x². En faisant le même parcours pour la composante en "b" perpendiculaire à l'axe du polariseur PAb₁, on voit qu'elle arrive en "j" au niveau de l'observateur avec une atténuation globale de 0,5w²x². La réunion de ces deux composantes conduit dont pour la couleur bleue "B" à un coefficient d'atténuation global de w²x². En suivant de la même façon le parcours de la couleur jaune Y dans l'état OFF, on arrive à un coefficient d'atténuation global pouvant être exprimé par zt²(y + 0,5z). Si on effectue maintenant, avec les valeurs indiquées au début, le rapport des coefficients d'atténuation de chaque couleur, on obtient pour le rapport B/Y une valeur de 0,70. Cela signifie que les couleurs bleue et jaune sont sensiblement dans la même proportion et que l'affichage apparaîtra donc en vert dans l'état OFF.

Si on considère maintenant l'état ON, c'est-à-dire celui dans lequel les segments commutés de la cellule CL ne modifient pas l'axe de polarisation, on peut établir que l'atténuation globale de la couleur bleue B peut être exprimée par 0,5w²(1 + x⁴) et celui de la couleur jaune Y par yz³ +0,5t⁴. En effectuant comme précédemment le rapport des coefficients d'atténuation de chaque couleur, on obtient pour le rapport Y/B une valeur de 18,20, c'est-à-dire une couleur jaune dominante.

De ce qui précède, il ressort que l'information affichée apparaîtra en jaune sur fond vert, c'est-à-dire sans obtenir un le contraste suffisant entre les deux couleurs initiales.

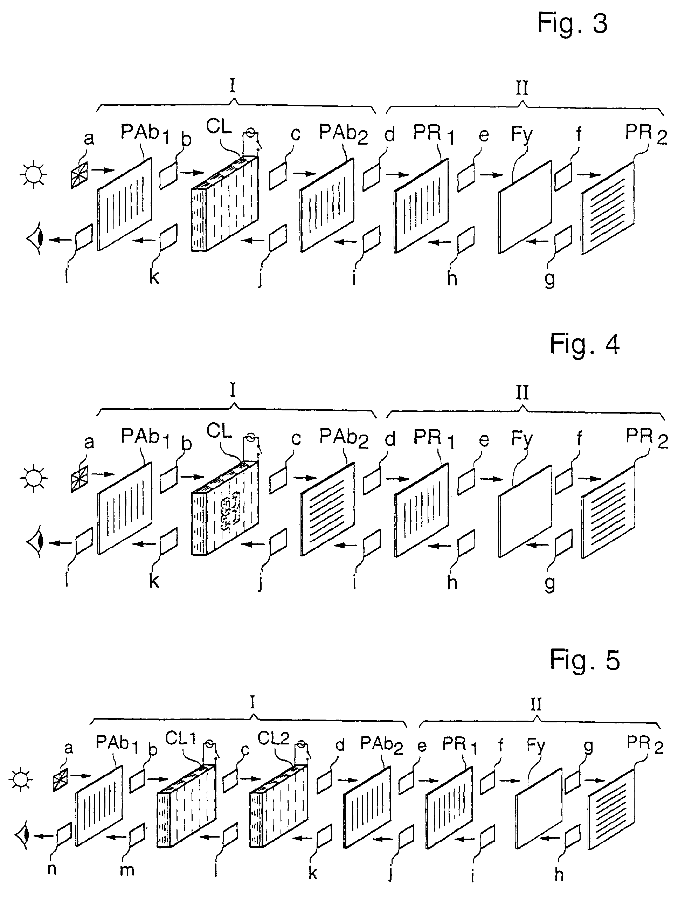

En se référant maintenant plus particulièrement aux figures 3 et 4, on va montrer ci-après comment l'ensemble d'affichage selon l'invention permet d'accroître très efficacement la pureté des couleurs et le contraste. Dans l'exemple représenté, cet ensemble comprend à l'avant un premier dispositif I formé par un module d'affichage à cristaux liquides, de part et d'autre duquel sont disposés deux polariseurs linéaires absorbants PAb₁ et PAb₂ sélectifs d'une première couleur, par exemple bleue "B", les axes de polarisation des deux polariseurs étant parallèles entre eux, et à l'arrière un deuxième dispositif II déterminant une deuxième couleur, par exemple jaune "Y". Ce deuxième dispositif II comprend à l'avant, c'est-à-dire du côté du premier dispositif I, un premier polariseur réflectif PR₁ ayant un axe de polarisation parallèle aux axes de polarisation des deux polariseurs du premier dispositif I, puis un filtre Fy sélectif de la deuxième couleur "Y" et à l'arrière un deuxième polariseur réflectif PR₂ ayant son axe de polarisation perpendiculaire à l'axe de polarisation du polariseur réflectif avant PR₁. Pour permettre une comparaison avec la construction de l'art antérieur, on a utilisé comme module d'affichage la même cellule à cristaux liquides que précédemment et on suppose que les coefficients d'atténuation des polariseurs linéaires absorbants sélectifs PAb₁ et PAb₂ et du filtre coloré Fy ont également les mêmes valeurs que précédemment.

Dans un premier temps pour simplifier, on suppose que les polariseurs réflectifs PR₁ et PR₂ sont parfaits, c'est-à-dire qu'ils sont totalement transparents à une lumière polarisée parallèlement à leur axe de polarisation et qu'inversement ils réfléchissent totalement une lumière polarisée perpendiculairement à leur axe. En réalité, les polariseurs réflectifs sont également imparfaits et une fraction de lumière polarisée perpendiculairement à leur axe est transmise, et peut permettre de rendre visible un élément placé à l'arrière.

En se référant maintenant au tableau II, on suivra comme précédemment le parcours de chaque couleur B et Y, dans chaque configuration de commutation OFF représentée à la figure 3 et ON représentée à la figure 4.

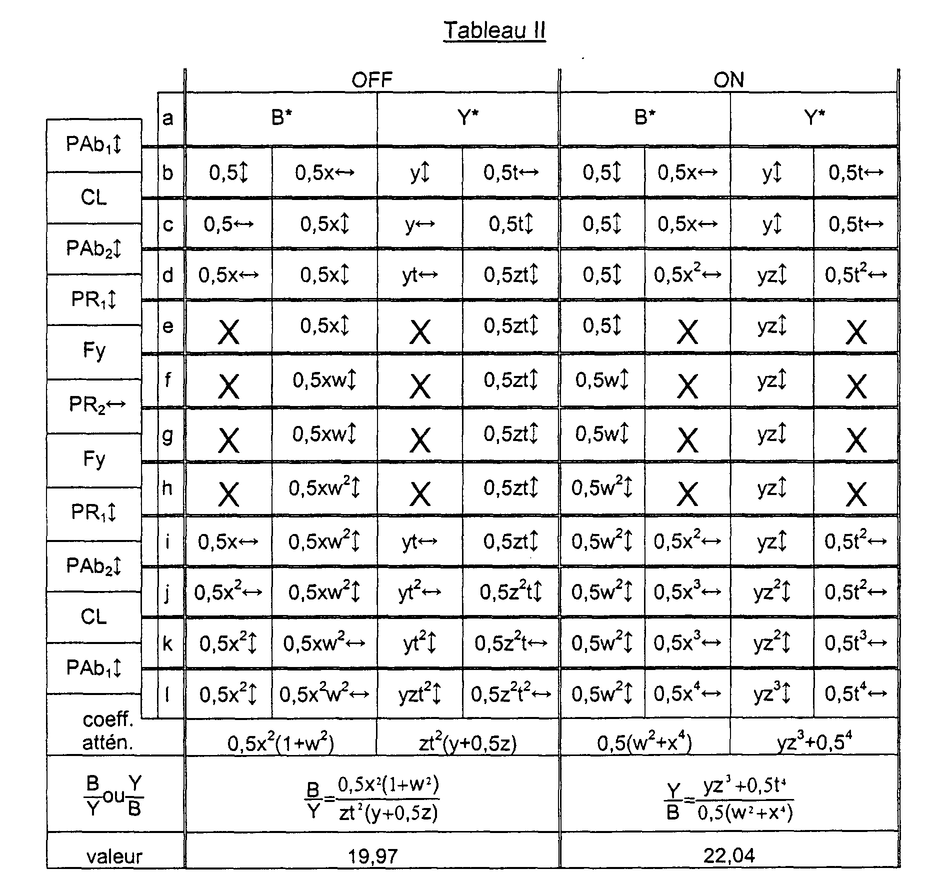

Si on considère la couleur bleue "B" dans l'état OFF en ne retenant en "b" que la composante polarisée parallèlement à l'axe du polariseur PAb₁, avec une atténuation de 0,5, on voit qu'en "c", après la cellule CL, elle a subi une rotation de 90°, en "d", ayant son axe parallèle à l'axe de polarisation du polariseur PAb₂ elle a subi une atténuation x portant sa valeur à 0,5x; son axe de polarisation étant alors perpendiculaire à celui du polariseur réflectif, elle est réfléchie sans modification en "i" pour subir, après le passage du polariseur PAb₂ une nouvelle atténuation x portant la valeur globale d'atténuation à 0,5x²; la cellule CL faisant effectuer une nouvelle rotation de 90° en "k", le polariseur PAb₁ est traversé sans atténuation de sorte que l'observateur en "I" voit la couleur bleue avec un coefficient d'atténuation pouvant s'exprimer par 0,5x². En effectuant le même "parcours" pour la deuxième composante bleue "B" dans l'état OFF et pour les couleurs bleue "B" et jaune "Y" dans l'état ON, on peut déterminer, comme indiqué dans le tableau II, pour chaque couleur dans chaque état de commutation un coefficient d'atténuation globale et un rapport de ces coefficients B/Y ou Y/B définissant la couleur dominante. Avec les valeurs d'atténuation indiquées au début, on obtient dans l'état OFF un rapport B/Y#20, c'est-à-dire une couleur nettement à dominante bleue pour le fond, et dans l'état ON correspondant aux segments de l'affichage, un rapport Y/B#22, c'est-à-dire une couleur nettement à dominante jaune, et finalement l'affichage d'une information avec le contraste optimum de jaune sur fond bleu. On observera que le coefficient d'atténuation de la couleur jaune "Y" dans l'état ON est le même que celui obtenu selon l'art antérieur. Par contre, il est facile de voir que le coefficient d'atténuation de la couleur bleue "B" selon la présente invention est 13 fois plus faible que celui obtenu selon l'art antérieur, c'est-à-dire que l'ensemble d'affichage permet d'obtenir une couche bleue beaucoup plus pure.

Il est bien évident que les coefficients d'atténuation mentionnés dans le tableau II permettent de définir la couleur dominante mais ne sont pas représentatifs de l'intensité observée, étant donné qu'il faut également tenir compte des autres longueurs d'onde de la lumière naturelle non polarisée et de la sensibilité propre de l'oeil à chaque longueur d'onde.

L'homme de métier peut facilement reprendre le cheminement des couleurs B et Y lorsqu'un des polariseurs sélectifs du premier dispositif est remplacé par un polariseur absorbant, non sélectif d'une couleur déterminée. Il est facile de montrer qu'on obtient pour le fond un rapport B/Y de 25 et pour l'affichage en tant que tel un rapport Y/B de l'ordre de 29, c'est-à-dire toujours un affichage jaune sur fond brillant bleu.

Il est bien évident que l'exemple qui vient d'être décrit avec deux couleurs complémentaires, bleu pour les polariseurs linéaires absorbants sélectifs et jaune pour le filtre coloré, peut sans sortir du cadre de l'invention être modifié, par exemple en échangeant les couleurs des polariseurs sélectifs et du filtre pour donner un affichage bleu sur fond jaune, en choisissant d'autres couleurs complémentaires, par exemple rouge et bleu pour conserver un contraste élevé, et à un moindre degré des couleurs non complémentaires.

A la lecture de la description ci-dessus, on pourrait penser que les éléments de construction de l'ensemble d'affichage selon l'invention ne diffèrent pas beaucoup de ceux qui étaient connus de l'art antérieur.

Pour atteindre le résultat recherché, il n'était en fait pas évident de trouver s'il devait être ajouté un ou plusieurs éléments, comment les disposer par rapport aux éléments de l'art antérieur et/ou comment modifier en conséquence lesdits éléments de l'art antérieur. De façon surprenante, hormis l'agencement qui vient d'être décrit, aucun autre agencement ne permet d'avoir des rapports B/Y ou Y/B pour le fond et pour l'information affichée élevés et proches l'un de l'autre, c'est-à-dire d'avoir une grande pureté de couleur et un contraste élevé.

En suivant la même démarche que celle qui a été décrite en référence aux tableaux I et II, on observera par exemple ce qui est indiqué ci-après. Si on permute l'orientation relative des deux polariseurs réflectifs PR₁ et PR₂, on aura pour le fond un rapport B/Y = 20 et pour les segments Y/B = 0,41, c'est-à-dire un affichage verdâtre sur fond bleu. Si on garde la disposition initiale des polariseurs réflectifs PR₁ et PR₂, mais si on tourne de 90° le polariseur PAb₂, on aura pour le fond un rapport B/Y = 2,44 et pour les segments Y/B = 0,05, c'est-à-dire un affichage bleu sur fond verdâtre. Si on effectue en même temps les deux modifications précédentes, on obtiendra un affichage vert sur fond jaunâtre.

Les autres orientations relatives des quatre polariseurs confèrent au polariseur réflectif arrière PR₂ un rôle passif, c'est-à-dire que la lumière polarisée incidente le traverse. L'effet observé dépendra alors du caractère plus ou moins réflectif d'un élément placé à l'arrière, c'est-à-dire par exemple de la teinte claire ou foncée du cadran d'un deuxième affichage. Parmi les huit possibilités encore offertes, une seule permet d'atteindre le but de l'invention, à savoir lorsqu'on a les polariseurs linéaires absorbants sélectifs, PAb₁ et PAb₂, et le polariseur réflectif avant PR₁ disposés avec des axes de polarisation parallèles entre eux et qu'on remplace le polariseur arrière PR₂ par un cadran clair, c'est-à-dire réflectif.

Comme cela a été indiqué au début, les épaisseurs des éléments de l'ensemble d'affichage ont fortement été exagérées. En réalité, cet ensemble peut être construit avec une épaisseur de l'ordre de 1,4 à 1,5 mm avec des verres de 0,3 mm pour la cellule. Le filtre coloré Fy peut être une feuille plastique, mais aussi simplement une laque colorée appliquée sur la face arrière du polariseur réflectif avant PR₁ ou sur la face avant du polariseur réflectif arrière PR₂ ou une coloration incorporée dans la masse du polariseur réflectif, c'est à dire en quelque sorte avoir un polariseur à la fois réflectif et sélectif de couleur. Cette construction contribue à réduire d'autant l'épaisseur de l'ensemble d'affichage et à en faciliter l'assemblage.

Dans la description qui précède, on a implicitement supposé que l'ensemble d'affichage bicolore selon l'invention occupait toute la surface de l'affichage. Selon une variante, cet ensemble ne peut en occuper qu'une partie en choisissant pour le polariseur réflectif avant PR₁ une découpe de surface inférieure à celle des autres éléments constitutifs de l'ensemble d'affichage. Il est ainsi possible d'avoir un affichage tricolore bleu, vert, jaune, ce qui peut offrir un intérêt esthétique supplémentaire.

Selon une autre variante qui peut être combinée avec celle indiquée ci-dessus, le module d'affichage à cristaux liquides peut avoir une structure plus complexe qu'une simple cellule CL. A titre d'exemple, la figure 5 montre le schéma d'un ensemble d'affichage dans lequel le module d'affichage est formé par une cellule à cristaux liquides CL₁ matricielle ou à segments identique à celle déjà décrite, et par une valve à cristaux liquides CL₂ contenant par exemple les mêmes cristaux liquides que CL₁, la cellule CL₁ et la valve étant représentées dans l'état OFF. Lorsque la valve CL₂ est dans l'état ON, elle est sans aucune influence sur la polarisation de la lumière qui la traverse et on obtient donc exactement le même effet visuel que celui qui a été décrit en référence au tableau II. Lorsque la valve CL₂ est au contraire dans l'état OFF, on va montrer en se référant au tableau III ci-après qu'on obtient en plus une inversion de contraste.

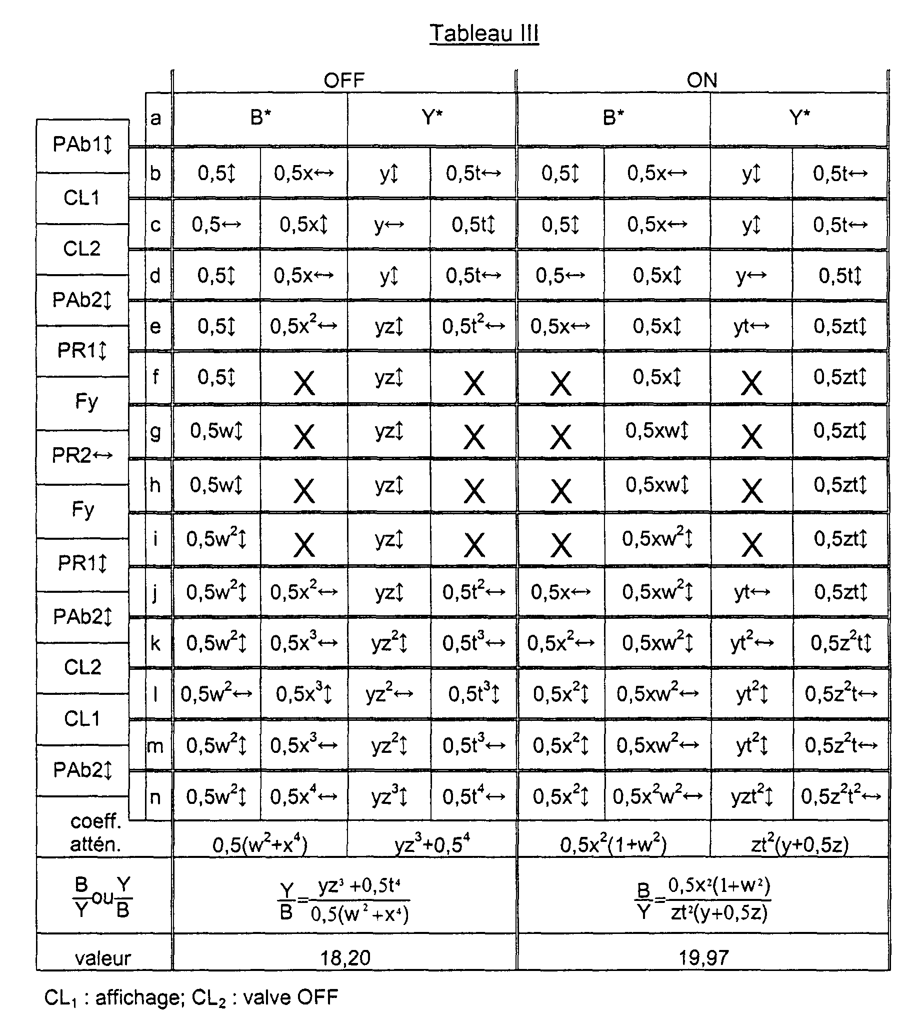

A titre explicatif, on va par exemple suivre dans l'état OFF, qui détermine la couleur du fond, le parcours de la composante de la lumière jaune "Y" polarisée en "b" parallèlement à l'axe du polariseur PAb₁ avec une atténuation y. En "c", après le passage de CL₁ elle a subi une rotation de 90°, puis en "d" après le passage de CL₂ une nouvelle rotation de 90° sans atténuation; en "e" elle subit une atténuation z portant l'atténuation totale à yz sans modification de la polarisation; en "f" et "g" elle traverse successivement PR₁ et Fy sans modification pour être réfléchie en "h" par PR₂ et traverser à nouveau en "i" successivement Fy et PR₁ sans modifications; sur la suite de son parcours jusqu'à "n" où elle est observée elle subit deux nouvelles atténuations z portant l'atténuation globale à yz³. En effectuant le même "parcours" pour la deuxième composante jaune et pour les deux composantes bleues dans l'état OFF et ensuite pour les composantes jaune Y et bleue B dans l'état ON, on obtient les coefficients d'atténuation indiqués dans le tableau. Avec les valeurs d'atténuation indiquées au début, on obtient dans l'état OFF un rapport Y/B#18, c'est-à-dire pour le fond une couleur nettement à dominante jaune et dans l'état ON un rapport B/Y#20, c'est-à-dire une couleur à dominante bleue pour les segments de l'affichage. Aussi en ajoutant une valve optique dont on peut changer l'état de commutation, on peut obtenir une inversion des deux couleurs tout en ayant toujours un contraste et une pureté de couleurs élevés.

Selon une autre variante qui peut être combinée avec les variantes précédentes, lorsqu'on a une cellule et une valve, il est possible de prévoir pour la valve deux zones à commutation séparées de sorte que ces zones puissent présenter des informations différenciables par inversion chromatique. Par "informations", il faut bien entendu entendre des informations alphanumériques, mais aussi des logos et autres dessins, en particulier lorsque l'affichage est de type matriciel. Lorsqu'on choisit un mode tricolore, comme indiqué précédemment, ce dernier exemple de réalisation permet d'offrir une très grande variété d'aspects avec de très faibles modifications des éléments constitutifs de l'ensemble d'affichage.

L'ensemble d'affichage bicolore selon l'invention, ainsi que ses variantes sont applicables à un grand nombre de produits devant délivrer une information visuelle sur un appareil fixe, tel qu'un tableau de bord, ou mobile telle qu'une montre. En prenant la montre au titre d'exemple, on voit comme représenté à la figure 1 que l'ensemble d'affichage, quelle que soit la variante de réalisation, peut être supporté par le cadran 10 et surmonté par un affichage analogique de l'heure courante au moyen des aiguilles 11, 12 et 13. En étant relié à la base de temps du mouvement d'horlogerie 5, l'ensemble d'affichage selon l'invention pourra délivrer des informations complémentaires tels que la date, le jour de la semaine, etc.; s'il est relié à des capteurs, il pourra afficher les informations fournies par ces capteurs. Comme cela a été indiqué précédemment, si l'élément réflectif arrière est un polariseur réflectif, compte-tenu du caractère imparfait de celui-ci il sera possible de disposer à l'arrière de celui-ci une source lumineuse permettant une meilleure vision nocturne de l'information affichée. Si l'élément réflectif arrière est de type métallique, il pourra avantageusement être formé par le cadran 10.

Selon un autre mode de réalisation non représenté, l'ensemble d'affichage bicolore selon l'invention est disposé sous la glace 4 lorsque l'élément réflectif arrière est un polariseur réflectif "imparfait" PR₂ permettant d'observer un deuxième affichage situé au niveau du cadran, tel qu'un affichage analogique. Si l'élément réflectif arrière est de type métallique, l'ensemble d'affichage selon l'invention peut en quelque sorte être dédoublé, en conservant par exemple sous la glace le premier dispositif I déterminant la première couleur et en disposant au niveau du cadran le deuxième dispositif II déterminant la deuxième couleur.

## Revendications

1. Ensemble d'affichage bicolore comprenant d'une part un premier dispositif I déterminant une première couleur ledit dispositif se composant d'un module d'affichage à cristaux liquides (CL; CL₁, CL₂), dont les configurations de commutation sont déterminées par une unité de commande électronique (7) alimentée par une source d'énergie (6), ledit module (CL; CL₁, CL₂) comprenant à l'avant un premier polariseur linéaire (PAb₁) et à l'arrière un deuxième polariseur linéaire (PAb₂), l'un au moins des deux polariseurs (PAb₁, PAb₂) étant sélectif de ladite première couleur, d'autre part un deuxième dispositif II comprenant un filtre coloré (Fy) correspondant à la deuxième couleur, **caractérisé en ce que** les polariseurs (PAb₁, PAb₂) du premier dispositif I ont leurs axes de polarisation parallèles entre eux, **en ce que** le filtre coloré (Fy) du deuxième dispositif II comprend à l'avant un polariseur réflectif (PR₁) ayant son axe de polarisation parallèle aux axes de polarisation des deux polariseurs (PAb₁, PAb₂) du premier dispositif I et à l'arrière un élément réfléchissant (R, PR₂), et **en ce que** l'unité de commande (7) permet de définir une configuration de commutation affichant une information dans la première couleur sur un fond correspondant à la deuxième couleur ou inversement.

2. Ensemble d'affichage selon la revendication 1, **caractérisé en ce que** l'élément réfléchissant du deuxième dispositif est, soit un deuxième polariseur réflectif (PR₂) croisé avec le polariseur réflectif avant (PR₁), soit un réflecteur transflectif.

3. Ensemble d'affichage selon la revendication 2, **caractérisé en ce qu'**il comporte en outre à l'arrière du deuxième dispositif, soit un deuxième affichage, soit une source lumineuse.

4. Ensemble d'affichage selon la revendication 1, **caractérisé en ce que** l'élément réfléchissant du deuxième dispositif est un réflecteur métallique.

5. Ensemble d'affichage selon la revendication 1, **caractérisé en ce que** les deux polariseurs (PAb1, PAb2) du premier dispositif sont tous les deux sélectifs de la première couleur.

6. Ensemble d'affichage selon la revendication 1, **caractérisé en ce que** le module d'affichage comprend une unique cellule d'affichage matriciel ou à segments à cristaux liquides (CL) procurant un affichage bicolore à l'état commuté.

7. Ensemble d'affichage selon la revendication 1, **caractérisé en ce que** le module d'affichage comprend une première cellule d'affichage matricielle ou à segments à cristaux liquides (CL₁) et une valve optique (CL₂) formée par une deuxième cellule à cristaux liquides dont la commutation d'un état ON à un état OFF ou inversement, permet, lorsque la cellule d'affichage (CL₁) est dans l'état ON, d'inverser la couleur de l'information affichée avec celle du fond sur lequel elle est affichée.

8. Ensemble d'affichage bicolore selon la revendication 7, **caractérisé en ce que** la valve (CL₂) comprend au moins deux zones distinctes commutables séparément et permettant, lorsqu'elles ont des configurations de commutation opposées d'avoir sur le même ensemble d'affichage des zones d'affichage présentant une inversion chromatique.

9. Ensemble d'affichage selon la revendication 1, **caractérisé en ce que** le polariseur réflectif avant (PR₁) du deuxième dispositif II comporte des zones totalement transparentes permettant un mélange des première et deuxième couleurs.

10. Ensemble d'affichage selon la revendication 1, **caractérisé en ce que** le filtre coloré est une laque appliquée sur la face arrière du polariseur réflectif (PR₁) ou sur la face avant de l'élément réflectif (R, PR₂) du deuxième dispositif, ou incorporé dans leur masse.

11. Ensemble d'affichage selon la revendication 1, **caractérisé en ce que** les cristaux liquides du module d'affichage sont choisis parmi les cristaux liquides de type twist nématique à anisotropie positive ou négative et de type à deux fréquences.

12. Ensemble d'affichage selon la revendication 1, **caractérisé en ce que** les première et deuxième couleurs sont des couleurs complémentaires.

13. Pièce d'horlogerie comprenant une boîte, fermée par une glace (4) et un fond (3), dans laquelle est logé un mouvement d'horlogerie (5) destiné à donner des informations horaires sur un cadran (10) situé entre la glace (4) et le fond (3) **caractérisé en ce que** le cadran (10) comprend un ensemble d'affichage selon l'une quelconque des revendications 1 à 12, ou est confondu avec ledit ensemble d'affichage pour afficher des grandeurs temporelles ou des grandeurs non temporelles de systèmes capteurs contenus dans la boîte de ladite pièce d'horlogerie.

14. Pièce d'horlogerie comprenant une boîte, fermée par une glace (4) et un fond (3), dans laquelle est logé un mouvement d'horlogerie (5) destiné à donner des informations horaires sur un cadran (10) situé entre la glace (4) et le fond (3), **caractérisé en ce que** la face interne de la glace comprend un ensemble d'affichage selon l'une quelconque des revendications 2, 3, 5 à 12 ou est confondue avec ledit ensemble d'affichage, pour afficher des grandeurs temporelles ou des grandeurs non temporelles de systèmes capteurs contenus dans la boîte de ladite pièce d'horlogerie.

15. Pièce d'horlogerie comprenant une boîte, fermée par une glace (4) et un fond (3), dans laquelle est logé un mouvement d'horlogerie (5) destiné à donner des informations sur un cadran (10) situé entre la glace (4) et le fond (3), **caractérisé en ce qu'**elle comprend en outre un ensemble d'affichage selon l'une quelconque des revendications 4 à 12 dans lequel le dispositif I déterminant la première couleur est supportée par la face interne de la glace (4) ou confondue avec elle et le dispositif II déterminant la deuxième couleur est supporté par le cadran (10) ou confondu avec lui.

16. Pièce d'horlogerie selon l'une quelconque des revendications 13 à 15, **caractérisée en ce que** le cadran comporte un affichage analogique de l'heure.
